# EUROPEAN PATENT APPLICATION

(11) **EP 1 744 271 A1**
(43) Date of publication of application: **17.01.2007**
(21) Application number: 05728479.6
(22) Date of filing: 06.04.2005
(51) Int. Cl.: G06Q 10/00, G06F 17/21

(54) **DOCUMENT PROCESSING DEVICE**

(30) Priority: 08.04.2004 JP 2004114572
(71) Applicant: JustSystems Corporation, Tokushima-shi, Tokushima 771-0189 (JP)
(72) Inventor: FUKURA, Tomoaki, JUSTSYSTEMS CORPORATION, Tokushima-shi, Tokushima 7710189 (JP); WAKE, Nobuaki, JUSTSYSTEMS CORPORATION, Tokushima-shi, Tokushima 7710189 (JP); OSHIMA, Norio, JUSTSYSTEMS CORPORATION, Tokushima-shi, Tokushima 7710189 (JP)
(74) Representative: Palmer, Jonathan R.
(86) International application number: PCT/JP2005/006801
(87) International publication number: WO 2005/098698

(57) **Abstract**

A display environment and an editing environment that allows personal information such as a to-do list etc. to be effectively managed have been sought.

An information management apparatus 300 provides a display/editing system for each vocabulary via a corresponding plug-in. Examples of such display/editing systems include: an HTML unit 150 for displaying/editing an HTML document; and an SVG unit 160 for displaying/editing an SVG document. In a case that an XML document that includes multiple management items described and managed in the form of a reminder is described using a vocabulary which cannot be handled by any one of the installed plug-ins, a VC unit 180 maps the document to another vocabulary which can be displayed, e.g., HTML or SVG. Such an arrangement allows this document to be displayed/edited using the HTML unit 150 or the SVG unit 160.

## Description

### Technical Field

The present invention relates to a document processing apparatus, and particularly to a technique for managing the information using a description language for handling a structured document.

### Background Art

Known examples of software for managing personal information include so-called PIM (Personal Information Manager) software (see Patent document 1, for example). The PIM software is designed giving consideration to personal use, and manages the personal information such as an address book, schedule, to-do list, notes, and so forth. These information sets have a data structure formed of records associated with one another using a certain attribute, and have an overall data structure similar to a relational database. The contents of each record are displayed in a particular form according to the properties of the record. For example, in a case that the record stores an address book, the contents of the record are displayed on a screen using an interface for address book input/output. On the other hand, in a case that the record stores a schedule, the contents of the record are displayed on a screen using an interface for schedule input/output.

### [Patent Document 1]

Japanese Patent Application Laid-open No. 9-147013

### Disclosure of Invention

### [Problems to be Solved by the Invention]

However, with an arrangement according to the aforementioned background technique, there is the need to display various information sets such as an address book, schedule, to-do list, and so forth, in separate forms by switching the interface. Accordingly, even the information sets that are closely and essentially related to one another need to be displayed separately, which is troublesome for the user. On the other hand, let us consider an arrangement in which multiple kinds of information sets are displayed on a single screen at the same time. With such an arrangement, from the perspective of the screen layout, there is the need to display the information sets in separate fields. Such an arrangement provides no solution to the problem of the information being dispersed. Accordingly, such an arrangement does not always facilitate visual understanding while browsing information, or does not always improve the ease of operability for information input.

The present inventor has made the present invention in view of the aforementioned problems. Accordingly, it is an object of the present invention to improve the ease-of-use of personal information management for the user.

### [Means for Solving the Problems]

In order to solve the aforementioned problems, a document processing apparatus according to an aspect of the present invention comprises: an instruction input unit for receiving an editing instruction from a user with respect to multiple management items which are managed as a reminder of a matter which is to be performed by the user; a file storage unit for storing a reminder file including the multiple management items in a structured form created using a vocabulary of a markup language for creating a structured document; a record processing unit for updating the reminder file based upon the editing results edited according to the editing instruction; a display processing unit for displaying the multiple management items included in the reminder file in a display region in separate display manners based upon markup languages corresponding to the respective kinds of information; a keyword detecting unit for detecting a word that satisfies a predetermined identification condition from a text received from the user via the instruction input unit as a keyword; and a vocabulary determining unit for selecting a vocabulary that accords with the keyword thus detected as a vocabulary for a markup language for creating a structured document, which allows a text received from the user via the instruction input unit to be displayed in a display region.

The term "reminder of the items to be performed by the user" as used here mainly represents a record in which the user makes a note of the items to be performed by the user in the course of business or private life, i.e., so-called to-do list. Note that the reminder may include additional information with respect to the deadline and the date, and may be used in the form of a scheduler. Also, the reminder may store information with respect to the items other than the items that are to be performed by the user in the form of additional information. That is to say, the management items, which are managed in the reminder, may be personal information which is referred to or recorded by the user himself/herself for a personal purpose. The term "markup language for creating a structured document" as used here represents a language that allows a document to be created in a structured form with respect to the contents of the document in a logical manner or in a layout manner using various tags. Examples of such markup languages include XML (extensible Markup Language). The term "vocabulary" as used here represents a set of tags (tag set) that accords with a predetermined markup language for creating a structured document. A predetermined tag set may be employed. Also, such a tag set may be determined by the user as desired.

With such an aspect, the format for displaying a text is determined according to a keyword included in the input text. Such an arrangement allows the user to input a text in a proper manner without being particularly concerned about the contents of the input text. This allows the user to input various information without being concerned about the input format with ease-of-use which is similar to that of a word processor. Furthermore, such an arrangement allows the information to be displayed in a suitable format according to the contents thereof even if the information has been input in a free form. This provides improved ease-of-use for the user.

Another aspect of the present invention also relates to a document processing apparatus. The document processing apparatus comprises: an instruction input unit for receiving an editing instruction from a user with respect to multiple management items which are managed as a reminder of a matter which is to be performed by the user; a file storage unit for storing a reminder file including the multiple management items in a structured form created using a vocabulary of a markup language for creating a structured document; a record processing unit for updating the reminder file based upon the editing results edited according to the editing instruction; a display processing unit for displaying multiple management items included in the aforementioned reminder file in a display region in separate display manners determined based upon markup languages corresponding to the respective kinds of information; and a keyword detecting unit for detecting a word that satisfies a predetermined identification condition from a text received from the user via the instruction input unit as a keyword. With such an arrangement, the display processing unit extracts a text, which includes the keyword thus detected, from another document file, and displays extraction results, which comprise at least a part of the text thus extracted, in the display region in separate display manners in a form such that the extraction results are embedded in the multiple management items according to the kind of information.

With such an aspect, upon input of any one of predetermined keywords, the text corresponding to the keyword is extracted from a document, and the text thus extracted is embedded in another document. Such an arrangement allows the user to form a document including desired information included in another document in an embedded manner only by inputting a particular word that serves as a predetermined keyword with ease-of-use which is similar to that of a word processor. This provides improved ease-of-use for the user.

Note that any combination of the aforementioned components or any manifestation of the present invention realized by replacement of a method, a device, a system, a computer program, a recording medium storing a computer program, a data structure, and so forth, is effective as an embodiment of the present invention.

### [Advantages]

The present invention provides personal information management with improved ease-of-use for the user.

### Brief Description of the Drawings

FIG. 1 is a diagram which shows a configuration of a document processing apparatus according to the background technique.
FIG. 2 is a diagram which shows an example of an XML document which is to be processed.
FIG. 3 is a diagram which shows an example in which the XML document shown in FIG. 2 is mapped to a table described in HTML.
FIG. 4 is a diagram which shows an example of a definition file used for mapping the XML document shown in FIG. 2 to the table shown in FIG. 3.
FIG. 5 is a diagram which shows an example of a screen on which the XML document, which has been described in a marks managing vocabulary and which is shown in FIG. 2, is displayed after having been mapped to HTML according to the correspondence shown in FIG. 3.
FIG. 6 is a diagram which shows an example of a graphical user interface provided by a definition file creating unit, which allows the user to create a definition file.
FIG. 7 is a diagram which shows another example of a screen layout created by the definition file creating unit.
FIG. 8 is a diagram which shows an example of an editing screen for an XML document, as provided by the document processing apparatus.
FIG. 9 is a diagram which shows another example of an XML document which is to be edited by the document processing apparatus.
FIG. 10 is a diagram which shows an example of a screen on which the document shown in FIG. 9 is displayed.
FIG. 11 is a diagram which shows a configuration of an information management apparatus according to an embodiment.
FIG. 12 is a diagram which shows an example of a screen on which each management item is displayed in a display manner for an editable screen.
FIG. 13 is a diagram which shows an XML source document corresponding to the display contents shown in FIG. 12.
FIG. 14 is a diagram which shows the relation between a source tree and a destination tree in a schematic manner.
FIG. 15 is a diagram which shows an example of displaying an editable screen and a table display screen on a single screen at the same time.
FIG. 16 is a diagram which shows an example of displaying the management items in the form of a scheduler screen.
FIG. 17 is a diagram which shows a state in which the contents of another document file are embedded in a scheduler screen shown in FIG. 16.

### Reference Numerals

- 10: file storage unit
- 12: instruction input unit
- 14: record processing unit
- 16: keyword detecting unit
- 18: vocabulary determining unit
- 40: reminder file
- 110: main control unit
- 120: editing unit
- 130: DOM unit
- 132: DOM provider
- 134: DOM builder
- 136: DOM writer
- 140: CSS unit
- 150: HTML unit
- 160: SVG unit
- 180: VC unit
- 182: mapping unit
- 184: definition file acquiring unit
- 186: definition file generator
- 300: information management apparatus

### Best Mode for Carrying Out the Invention

Description will be made below regarding the background technique for the present invention before detailed description of the present embodiment.

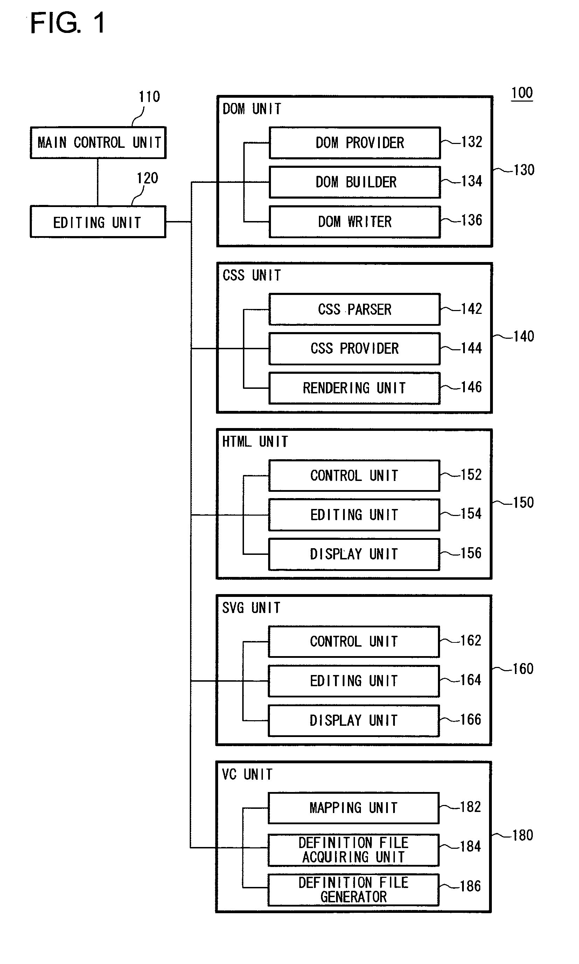

FIG. 1 illustrates a structure of a document processing apparatus 100 according to the background technique. The document processing apparatus 100 processes a structured document where data in the document are classified into a plurality of components having a hierarchical structure. Represented in the background technique is an example in which an XML document, as one type of a structured document, is processed. The document processing apparatus 100 is comprised of a main control unit 110, an editing unit 120, a DOM unit 130, a CSS unit 140, an HTML unit 150, an SVG unit 160 and a VC unit 180 which serves as an example of a conversion unit. In terms of hardware components, these unit structures may be realized by any conventional processing system or equipment, including a CPU or memory of any computer, a memory-loaded program, or the like. Here, the drawing shows a functional block configuration which is realized by cooperation between the hardware components and software components. Thus, it would be understood by those skilled in the art that these function blocks can be realized in a variety of forms by hardware only, software only or the combination thereof.

The main control unit 110 provides for the loading of a plug-in or a framework for executing a command. The editing unit 120 provides a framework for editing XML documents. Display and editing functions for a document in the document processing apparatus 100 are realized by plug-ins, and the necessary plug-ins are loaded by the main control unit 110 or the editing unit 120 according to the type of document under consideration. The main control unit 110 or the editing unit 120 determines which vocabulary or vocabularies describes the content of an XML document to be processed, by referring to a name space of the document to be processed, and loads a plug-in for display or editing corresponding to the thus determined vocabulary so as to execute the display or the editing. For instance, an HTML unit 150, which displays and edits HTML documents, and an SVG unit 160, which displays and edits SVG documents, are implemented in the document processing apparatus 100. That is, a display system and an editing system are implemented as plug-ins for each vocabulary (tag set), so that when an HTML document and an SVG document are edited, the HTML unit 150 and the SVG unit 160 are loaded, respectively. As will be described later, when compound documents, which contain both the HTML and SVG components, are to be processed, both the HTML unit 150 and the SVG unit 160 are loaded.

By implementing the above structure, a user can select so as to install only necessary functions, and can add or delete a function or functions at a later stage, as appropriate. Thus, the storage area of a recording medium, such as a hard disk, can be effectively utilized, and the wasteful use of memory can be prevented at the time of executing programs. Furthermore, since the capability of this structure is highly expandable, a developer can deal with new vocabularies in the form of plug-ins, and thus the development process can be readily facilitated. As a result, the user can also add a function or functions easily at low cost by adding a plug-in or plug-ins.

The editing unit 120 receives an event, which is an editing instruction, from the user via the user interface. Upon reception of such an event, the editing unit 120 notifies a suitable plug-in or the like of this event, and controls the processing such as redoing this event, canceling (undoing) this event, etc.

The DOM unit 130 includes a DOM provider 132, a DOM builder 134 and a DOM writer 136. The DOM unit 130 realizes functions in compliance with a document object model (DOM), which is defined to provide an access method used for handling data in the form of an XML document. The DOM provider 132 is an implementation of a DOM that satisfies an interface defined by the editing unit 120. The DOM builder 134 generates DOM trees from XML documents. As will be described later, when an XML document to be processed is mapped to another vocabulary by the VC unit 180, a source tree, which corresponds to the XML document in a mapping source, and a destination tree, which corresponds to the XML document in a mapping destination, are generated. At the end of editing, for example, the DOM writer 136 outputs a DOM tree as an XML document.

The CSS unit 140, which provides a display function conforming to CSS, includes a CSS parser 142, a CSS provider 144 and a rendering unit 146. The CSS parser 142 has a parsing function for analyzing the CSS syntax. The CSS provider 144 is an implementation of a CSS object and performs CSS cascade processing on the DOM tree. The rendering unit 146 is a CSS rendering engine and is used to display documents, described in a vocabulary such as HTML, which are laid out using CSS.

The HTML unit 150 displays or edits documents described in HTML. The SVG unit 160 displays or edits documents described in SVG. These display/editing systems are realized in the form of plug-ins, and each system is comprised of a display unit (also designated herein as a "canvas"), which displays documents, a control unit (also designated herein as an "editlet"), which transmits and receives events containing editing commands, and an edit unit (also designated herein as a "zone"), which edits the DOM according to the editing commands. Upon the control unit 152 or 162 receiving a DOM tree editing command from an external source, the edit unit modifies the DOM tree and the display unit updates the display. These units have a structure similar to the framework of the so-called MVC (Model-View-Controller). With such a structure, in general, the display unit correspond to "View". On the other hand, the control units correspond to "Controller", and the DOM instance corresponds to "Model". The document processing apparatus 100 according to the background technique allows an XML document to be edited according to each given vocabulary, as well as providing a function of editing the HTML document in the form of tree display. The HTML unit 150 provides a user interface for editing an HTML document in a manner similar to a word processor, for example. On the other hand, the SVG unit 160 provides a user interface for editing an SVG document in a manner similar to an image drawing tool.

The VC unit 180 includes a mapping unit 182, a definition file acquiring unit 184 and a definition file generator 186. The VC unit 180 performs mapping of a document, which has been described in a particular vocabulary, to another given vocabulary, thereby providing a framework that allows a document to be displayed and edited by a display/editing plug-in corresponding to the vocabulary to which the document is mapped. In the background technique, this function is called a vocabulary connection (VC). In the VC unit 180, the definition file acquiring unit 184 acquires a script file in which the mapping definition is described. Here, the definition file specifies the correspondence (connection) between the nodes for each node. Furthermore, the definition file may specify whether or not editing of the element values or attribute values is permitted. Furthermore, the definition file may include operation expressions using the element values or attribute values for the node. Detailed description will be made later regarding these functions. The mapping unit 182 instructs the DOM builder 134 to generate a destination tree with reference to the script file acquired by the definition file acquiring unit 184. This manages the correspondence between the source tree and the destination tree. The definition file generator 186 offers a graphical user interface which allows the user to generate a definition file.

The VC unit 180 monitors the connection between the source tree and the destination tree. Upon reception of an editing instruction from the user via a user interface provided by a plug-in that handles a display function, the VC unit 180 first modifies a relevant node of the source tree. As a result, the DOM unit 130 issues a mutation event indicating that the source tree has been modified. Upon reception of the mutation event thus issued, the VC unit 180 modifies a node of the destination tree corresponding to the modified node, thereby updating the destination tree in a manner that synchronizes with the modification of the source tree. Upon reception of a mutation event that indicates that the destination tree has been modified, a plug-in having functions of displaying/editing the destination tree, e.g., the HTML unit 150, updates a display with reference to the destination tree thus modified. Such a structure allows a document described in any vocabulary, even a minor vocabulary used in a minor user segment, to be converted into a document described in another major vocabulary. This enables such a document described in a minor vocabulary to be displayed, and provides an editing environment for such a document.

An operation in which the document processing apparatus 100 displays and/or edits documents will be described herein below. When the document processing apparatus 100 loads a document to be processed, the DOM builder 134 generates a DOM tree from the XML document. The main control unit 110 or the editing unit 120 determines which vocabulary describes the XML document by referring to a name space of the XML document to be processed. If the plug-in corresponding to the vocabulary is installed in the document processing apparatus 100, the plug-in is loaded so as to display/edit the document. If, on the other hand, the plug-in is not installed in the document processing apparatus 100, a check shall be made to see whether a mapping definition file exists or not. And if the definition file exits, the definition file acquiring unit 184 acquires the definition file and generates a destination tree according to the definition, so that the document is displayed/edited by the plug-in corresponding to the vocabulary which is to be used for mapping. If the document is a compound document containing a plurality of vocabularies, relevant portions of the document are displayed/edited by plug-ins corresponding to the respective vocabularies, as will be described later. If the definition file does not exist, a source or tree structure of a document is displayed and the editing is carried out on the display screen.

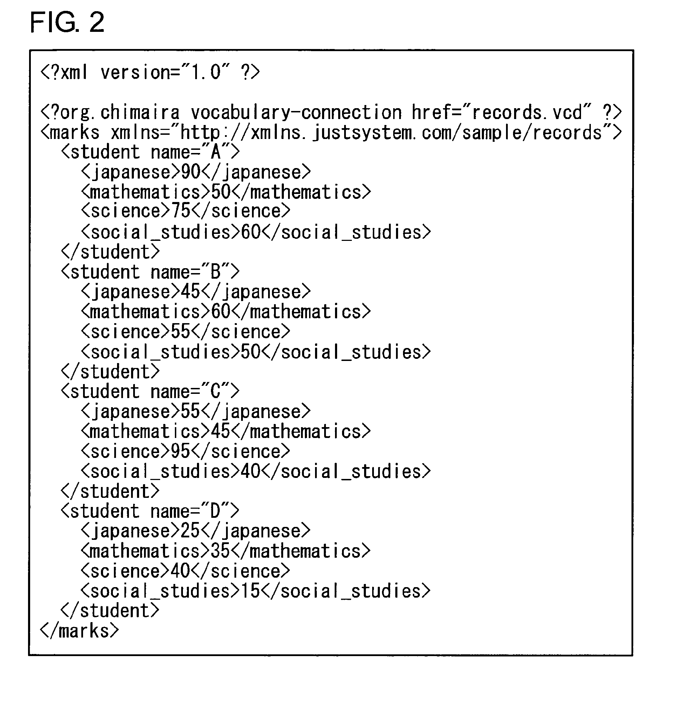

FIG. 2 shows an example of an XML document to be processed. According to this exemplary illustration, the XML document is used to manage data concerning grades or marks that students have earned. A component "marks", which is the top node of the XML document, includes a plurality of components "student" provided for each student under "marks". The component "student" has an attribute "name" and contains, as child elements, the subjects "japanese", "mathematics", "science", and "social_studies". The attribute "name" stores the name of a student. The components "japanese", "mathematics", "science" and "social_studies" store the test scores for the subjects Japanese, mathematics, science, and social studies, respectively. For example, the marks of a student whose name is "A" are "90" for Japanese, "50" for mathematics, "75" for science and "60" for social studies. Hereinafter, the vocabulary (tag set) used in this document will be called "marks managing vocabulary".

Here, the document processing apparatus 100 according to the background technique does not have a plug-in which conforms to or handles the display/editing of marks managing vocabularies. Accordingly, before displaying such a document in a manner other than the source display manner or the tree display manner, the above-described VC function is used. That is, there is a need to prepare a definition file for mapping the document, which has been described in the marks managing vocabulary, to another vocabulary, which is supported by a corresponding plug-in, e.g., HTML or SVG. Note that description will be made later regarding a user interface that allows the user to create the user's own definition file. Now, description will be made below regarding a case in which a definition file has already been prepared.

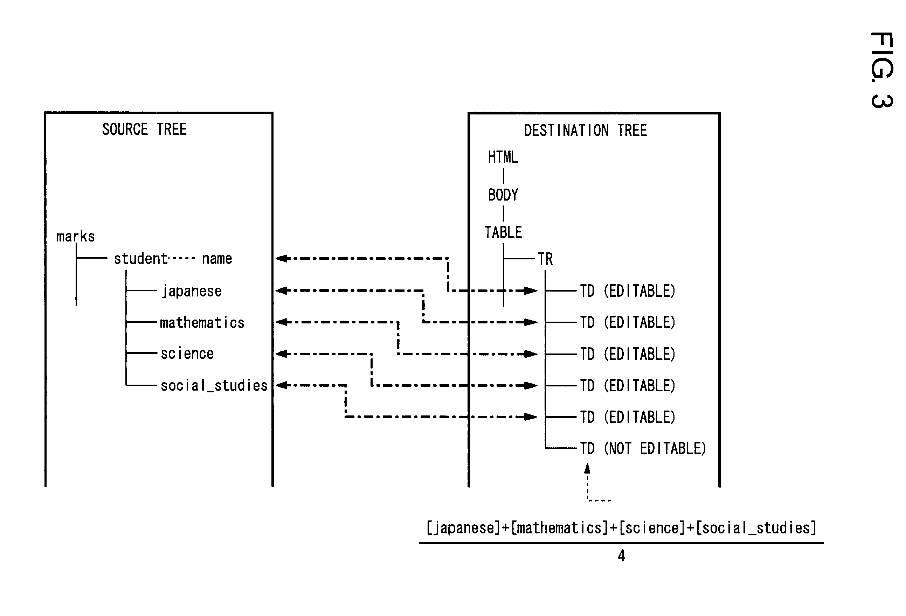

FIG. 3 shows an example in which the XML document shown in FIG. 2 is mapped to a table described in HTML. In an example shown in FIG. 3, a "student" node in the marks managing vocabulary is associated with a row ("TR" node) of a table ("TABLE" node) in HTML. The first column in each row corresponds to an attribute value "name", the second column to a "japanese" node element value, the third column to a "mathematics" node element value, the fourth column to a "science" node element value and the fifth column to a "social_studies" node element value. As a result, the XML document shown in FIG. 2 can be displayed in an HTML tabular format. Furthermore, these attribute values and element values are designated as being editable, so that the user can edit these values on a display screen using an editing function of the HTML unit 150. In the sixth column, an operation expression is designated for calculating a weighted average of the marks for Japanese, mathematics, science and social studies, and average values of the marks for each student are displayed. In this manner, more flexible display can be effected by making it possible to specify the operation expression in the definition file, thus improving the users' convenience at the time of editing. In this example shown in FIG. 3, editing is designated as not being possible in the sixth column, so that the average value alone cannot be edited individually. Thus, in the mapping definition it is possible to specify editing or no editing so as to protect the users against the possibility of performing erroneous operations.

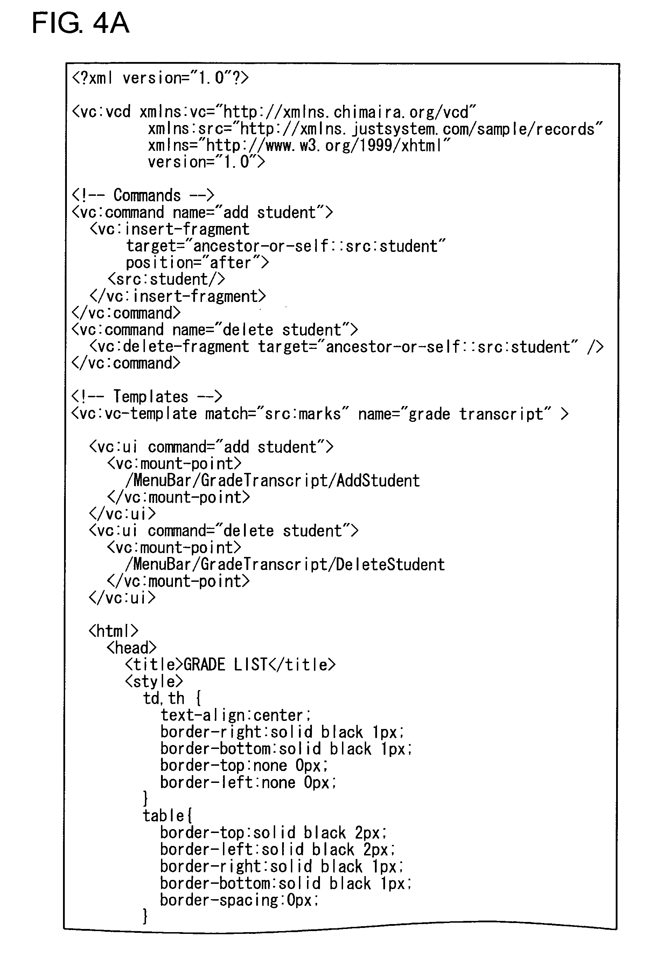

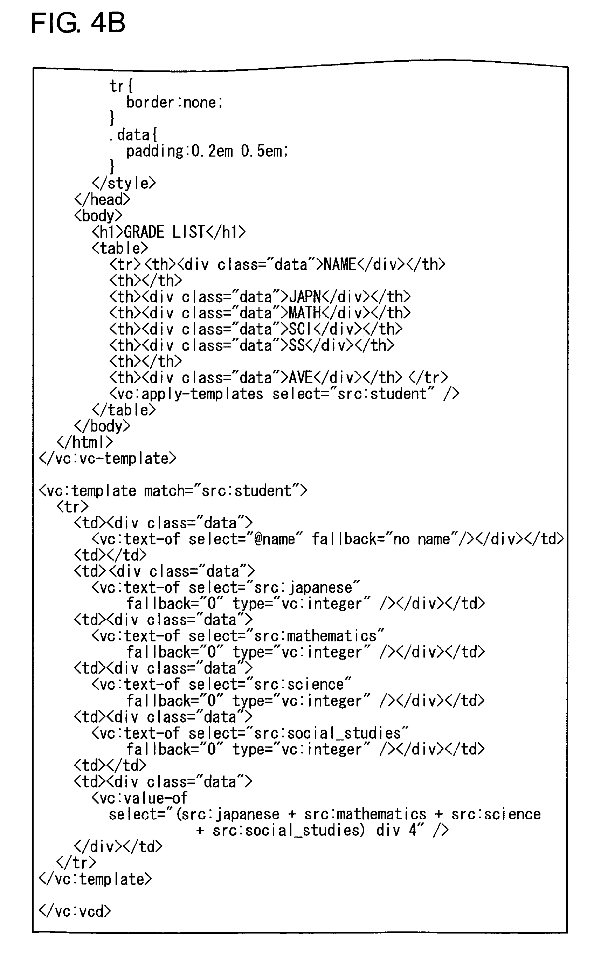

FIG. 4 illustrates an example of a definition file to map the XML document shown in FIG. 2 to the table shown in FIG. 3. This definition file is described in script language defined for use with definition files. In the definition file, definitions of commands and templates for display are described. In the example shown in FIG. 4, "add student" and "delete student" are defined as commands, and an operation of inserting a node "student" into a source tree and an operation of deleting the node "student" from the source tree, respectively, are associated with these commands. Furthermore, the definition file is described in the form of a template, which describes that a header, such as "name" and "japanese", is displayed in the first row of a table and the contents of the node "student" are displayed in the second and subsequent rows. In the template displaying the contents of the node "student", a term containing "text-of" indicates that editing is permitted, whereas a term containing "value-of" indicates that editing is not permitted. Among the rows where the contents of the node "student" are displayed, an operation expression "(src:japanese + src:mathematics + scr:science + scr:social studies) div 4" is described in the sixth row. This means that the average of the student's marks is displayed.

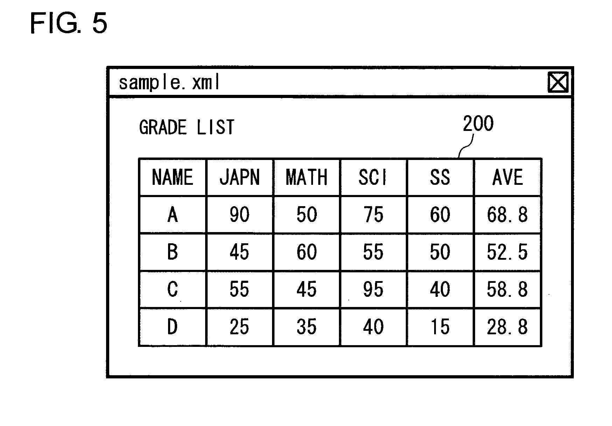

FIG. 5 shows an example of a display screen on which an XML document described in the marks managing vocabulary shown in FIG. 2 is displayed by mapping the XML document to HTML using the correspondence shown in Fig. 3. Displayed from left to right in each row of a table 200 are the name of each student, marks for Japanese, marks for mathematics, marks for science, marks for social studies and the averages thereof. The user can edit the XML document on this screen. For example, when the value in the second row and the third column is changed to "70", the element value in the source tree corresponding to this node, that is, the marks of student "B" for mathematics are changed to "70". At this time, in order to have the destination tree follow the source tree, a relevant portion of the destination tree is changed accordingly, so that the HTML unit 150 updates the display based on the destination tree thus changed. Hence, the marks of student "B" for mathematics are changed to "70", and the average is changed to "55" in the table on the screen.

On the screen as shown in FIG. 5, commands like "add student" and "delete student" are displayed in a menu as defined in the definition file shown in FIG. 4. When the user selects a command from among these commands, a node "student" is added or deleted in the source tree. In this manner, with the document processing apparatus 100 according to the background technique, it is possible not only to edit the element values of components in a lower end of a hierarchical structure but also to edit the hierarchical structure. An edit function for editing such a tree structure may be presented to the user in the form of commands. Furthermore, a command to add or delete rows of a table may, for example, be linked to an operation of adding or deleting the node "student". A command to embed other vocabularies therein may be presented to the user. This table may be used as an input template, so that marks data for new students can be added in a fill-in-the-blank format. As described above, the VC function allows a document described in the marks managing vocabulary to be edited using the display/editing function of the HTML unit 150.

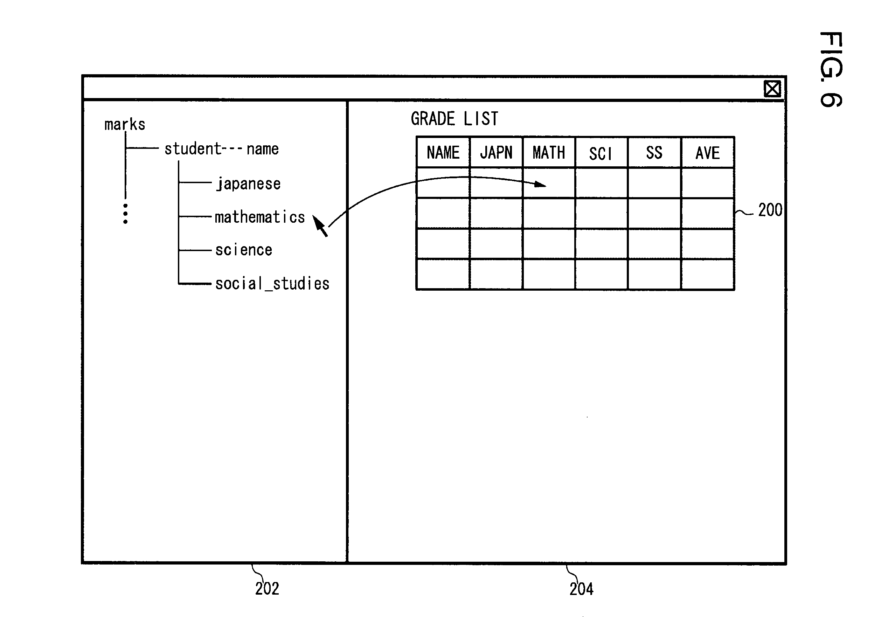

FIG. 6 shows an example of a graphical user interface, which the definition file generator 186 presents to the user, in order for the user to generate a definition file. An XML document to be mapped is displayed in a tree in a left-hand area 202 of a screen. The screen layout of an XML document after mapping is displayed in a right-hand area 204 of the screen. This screen layout can be edited by the HTML unit 150, and the user creates a screen layout for displaying documents in the right-hand area 204 of the screen. For example, a node of the XML document which is to be mapped, which is displayed in the left-hand area 202 of the screen, is dragged and dropped into the HTML screen layout in the right-hand area 204 of the screen using a pointing device such as a mouse, so that a connection between a node at a mapping source and a node at a mapping destination is specified. For example, when "mathematics," which is a child element of the element "student," is dropped to the intersection of the first row and the third column in a table 200 on the HTML screen, a connection is established between the "mathematics" node and a "TD" node in the third column. Either editing or no editing can be specified for each node. Moreover, the operation expression can be embedded in a display screen. When the screen editing is completed, the definition file generator 186 generates definition files, which describe connections between the screen layout and nodes.

Viewers or editors which can handle major vocabularies such as XHTML, MathML and SVG have already been developed. However, it does not serve any practical purpose to develop dedicated viewers or editors for such documents described in the original vocabularies as shown in FIG. 2. If, however, the definition files for mapping to other vocabularies are created as mentioned above, the documents described in the original vocabularies can be displayed and/or edited utilizing the VC function without the need to develop a new viewer or editor.

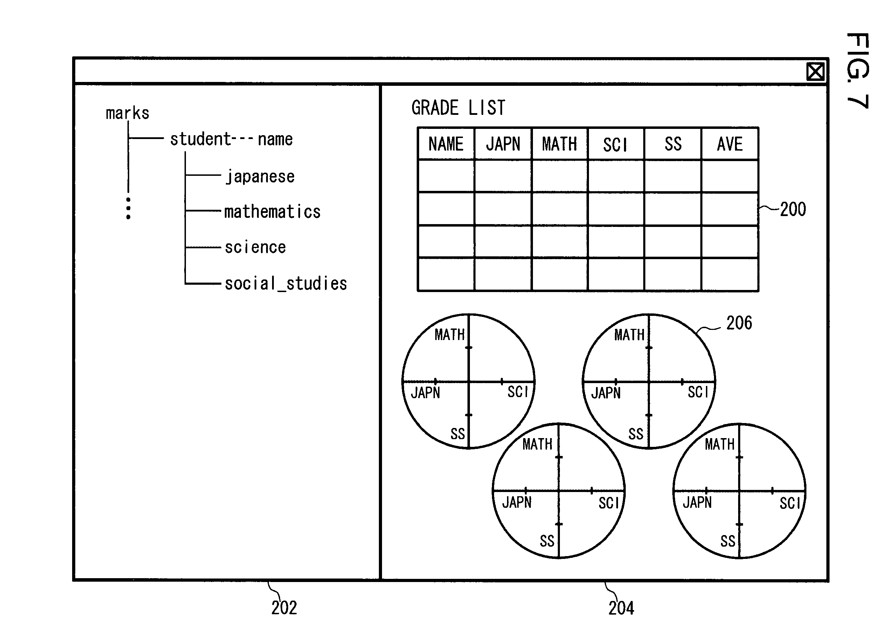

FIG. 7 shows another example of a screen layout generated by the definition file generator 186. In the example shown in FIG. 7, a table 200 and circular graphs 206 are created on a screen for displaying XML documents described in the marks managing vocabulary. The circular graphs 206 are described in SVG. As will be discussed later, the document processing apparatus 100 according to the background technique can process a compound document described in the form of a single XML document according to a plurality of vocabularies. That is why the table 200 described in HTML and the circular graphs 206 described in SVG can be displayed on the same screen.

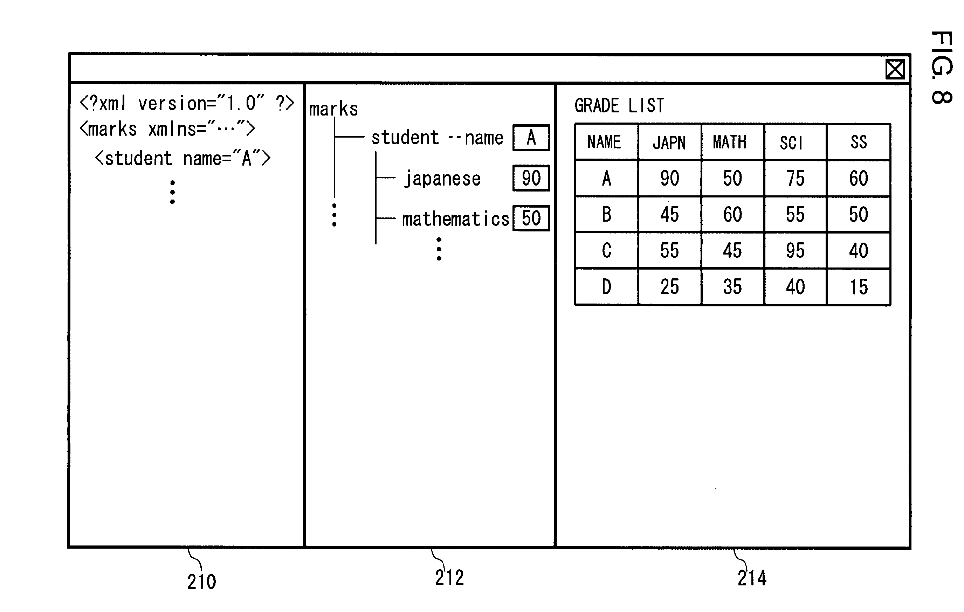

FIG. 8 shows an example of a display medium, which in a preferred but non-limiting embodiment is an edit screen, for XML documents processed by the document processing apparatus 100. In the example shown in FIG. 8, a single screen is partitioned into a plurality of areas and the XML document to be processed is displayed in a plurality of different display formats at the respective areas. The source of the document is displayed in an area 210, the tree structure of the document is displayed in an area 212, and the table shown in FIG. 5 and described in HTML is displayed in an area 214. The document can be edited in any of these areas, and when the user edits content in any of these areas, the source tree will be modified accordingly, and then each plug-in that handles the corresponding screen display updates the screen so as to effect the modification of the source tree. Specifically, display units of the plug-ins in charge of displaying the respective edit screens are registered in advance as listeners for mutation events that provide notice of a change in the source tree. When the source tree is modified by any of the plug-ins or the VC unit 180, all the display units, which are displaying the edit screen, receive the issued mutation event(s) and then update the screens. At this time, if the plug-in is executing the display through the VC function, the VC unit 180 modifies the destination tree following the modification of the source tree. Thereafter, the display unit of the plug-in modifies the screen by referring to the destination tree thus modified.

For example, when the source display and tree-view display are implemented by dedicated plug-ins, the source-display plug-in and the tree-display plug-in execute their respective displays by directly referring to the source tree without involving the destination tree. In this case, when the editing is done in any area of the screen, the source-display plug-in and the tree-display plug-in update the screen by referring to the modified source tree. Also, the HTML unit 150 in charge of displaying the area 214 updates the screen by referring to the destination tree, which has been modified following the modification of the source tree.

The source display and the tree-view display can also be realized by utilizing the VC function. That is to say, an arrangement may be made in which the source and the tree structure are laid out in HTML, an XML document is mapped to the HTML structure thus laid out, and the HTML unit 150 displays the XML document thus mapped. In such an arrangement, three destination trees in the source format, the tree format and the table format are generated. If the editing is carried out in any of the three areas on the screen, the VC unit 180 modifies the source tree and, thereafter, modifies the three destination trees in the source format, the tree format and the table format. Then, the HTML unit 150 updates the three areas of the screen by referring to the three destination trees.

In this manner, a document is displayed on a single screen in a plurality of display formats, thus improving a user's convenience. For example, the user can display and edit a document in a visually easy-to-understand format using the table 200 or the like while understanding the hierarchical structure of the document by the source display or the tree display. In the above example, a single screen is partitioned into a plurality of display formats, and they are displayed simultaneously. Also, a single display format may be displayed on a single screen so that the display format can be switched according to the user's instructions. In this case, the main control unit 110 receives from the user a request for switching the display format and then instructs the respective plug-ins to switch the display.

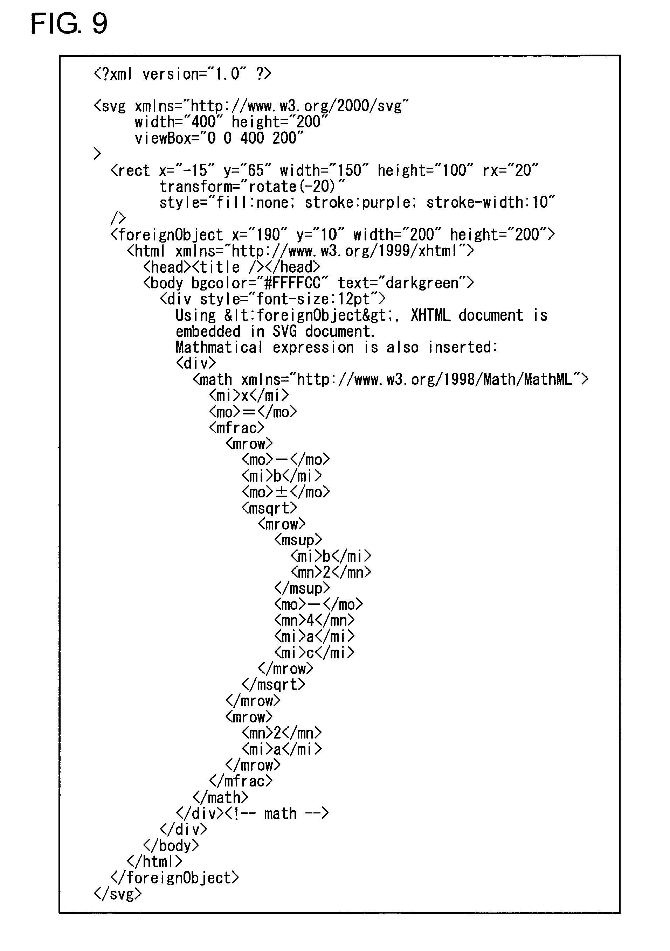

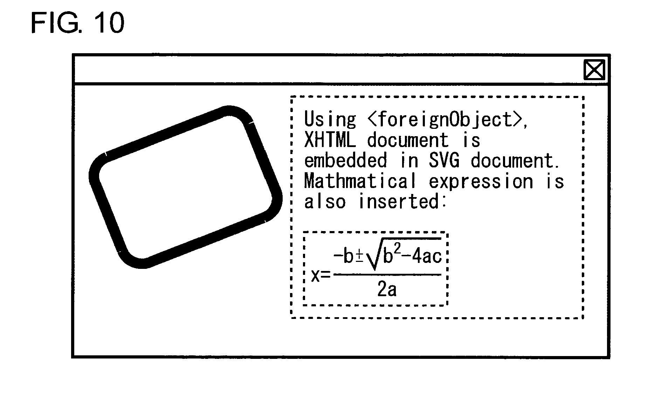

FIG. 9 illustrates another example of an XML document edited by the document processing apparatus 100. In the XML document shown in FIG. 9, an XHTML document is embedded in a "foreignObject" tag of an SVG document, and the XHTML document contains an equation described in MathML. In this case, the editing unit 120 assigns the rendering job to an appropriate display system by referring to the name space. In the example illustrated in FIG. 9, first, the editing unit 120 instructs the SVG unit 160 to render a rectangle, and then instructs the HTML unit 150 to render the XHTML document. Furthermore, the editing unit 120 instructs a MathML unit (not shown) to render an equation. In this manner, the compound document containing a plurality of vocabularies is appropriately displayed. FIG. 10 illustrates the resulting display.

The displayed menu may be switched corresponding to the position of the cursor (carriage) during the editing of a document. That is, when the cursor lies in an area where an SVG document is displayed, the menu provided by the SVG unit 160, or a command set which is defined in the definition file for mapping the SVG document, is displayed. On the other hand, when the cursor lies in an area where the XHTML document is displayed, the menu provided by the HTML unit 150, or a command set which is defined in the definition file for mapping the HTML document, is displayed. Thus, an appropriate user interface can be presented according to the editing position.

In a case that there is neither a plug-in nor a mapping definition file suitable for any one of the vocabularies according to which the compound document has been described, a portion described in this vocabulary may be displayed in source or in tree format. In the conventional practice, when a compound document is to be opened where another document is embedded in a particular document, their contents cannot be displayed without the installation of an application to display the embedded document. According to the background technique, however, the XML documents, which are composed of text data, may be displayed in source or in tree format so that the contents of the documents can be ascertained. This is a characteristic of the text-based XML documents or the like.

Another advantageous aspect of the data being described in a text-based language, for example, is that, in a single compound document, a part of the compound document described in a given vocabulary can be used as reference data for another part of the same compound document described in a different vocabulary. Furthermore, when a search is made within the document, a string of characters embedded in a drawing, such as SVG, may also be search candidates.

In a document described in a particular vocabulary, tags belonging to other vocabularies may be used. Though such an XML document is generally not valid, it can be processed as a valid XML document as long as it is well-formed. In such a case, the tags thus inserted that belong to other vocabularies may be mapped using a definition file. For instance, tags such as "Important" and "Most Important" may be used so as to display a portion surrounding these tags in an emphasized manner, or may be sorted out in the order of importance.

When the user edits a document on an edit screen as shown in FIG. 10, a plug-in or a VC unit 180, which is in charge of processing the edited portion, modifies the source tree. A listener for mutation events can be registered for each node in the source tree. Normally, a display unit of the plug-in or the VC unit 180 conforming to a vocabulary that belongs to each node is registered as the listener. When the source tree is modified, the DOM provider 132 traces toward a higher hierarchy from the modified node. If there is a registered listener, the DOM provider 132 issues a mutation event to the listener. For example, referring to the document shown in FIG. 9, if a node which lies lower than the <html> node is modified, the mutation event is notified to the HTML unit 150, which is registered as a listener to the <html> node. At the same time, the mutation event is also notified to the SVG unit 160, which is registered as a listener in an <svg> node, which lies upper to the <html> node. At this time, the HTML unit 150 updates the display by referring to the modified source tree. Since the nodes belonging to the vocabulary of the SVG unit 160 itself are not modified, the SVG unit 160 may disregard the mutation event.

Depending on the contents of the editing, modification of the display by the HTML unit 150 may change the overall layout. In such a case, the layout is updated by a screen layout management mechanism, e.g., the plug-in that handles the display of the highest node, in increments of display regions which are displayed according to the respective plug-ins. For example, in a case of expanding a display region managed by the HTML unit 150, first, the HTML unit 150 renders a part managed by the HTML unit 150 itself, and determines the size of the display region. Then, the size of the display area is notified to the component that manages the screen layout so as to request the updating of the layout. Upon receipt of this notice, the component that manages the screen layout rebuilds the layout of the display area for each plug-in. Accordingly, the display of the edited portion is appropriately updated and the overall screen layout is updated.

### (Embodiments)

Let us say that an information management apparatus according to an embodiment of the present invention is configured on the basis of the aforementioned background technique, and the information management apparatus according to the present embodiment includes the document processing device according to the aforementioned background technique in the form of a part of the present embodiment. That is to say, the information management apparatus according to the present embodiment is realized via a combination of a PC (personal computer) and a personal information management program such as PIM software or the like installed in the PC on the basis of the aforementioned background technique. The personal information management program provides personal information for the user such as the to-do list, schedule, address book, and so forth, in the form of a structured document. Furthermore, the personal information management program displays such information on a screen using a markup language such as HTML or the like. The term "structured document" as used here represents an XML document, for example, in which the contents are described in a predetermined vocabulary.

The present embodiment allows the user to input multiple kinds of personal information in the same way as with a word processor without being particularly concerned about difference in the display format corresponding to the kind of information. The word processor is one of the most user-friendly kinds of software for a large segment of PC users. The present embodiment provides PIM software that provides ease-of-use which is similar to that of a word processor, thereby offering a more intuitive interface. Also, an arrangement may be made having a function of switching the interface to a desired one such as a word processor or a scheduler according to the instruction from the user. Such an arrangement allows the user to browse or understand various kinds of information in a multifaceted manner, thereby offering effective management of personal information. Furthermore, the present embodiment allows the user to determine a vocabulary for describing each information. This allows the user to add and manage the information in a desired manner.

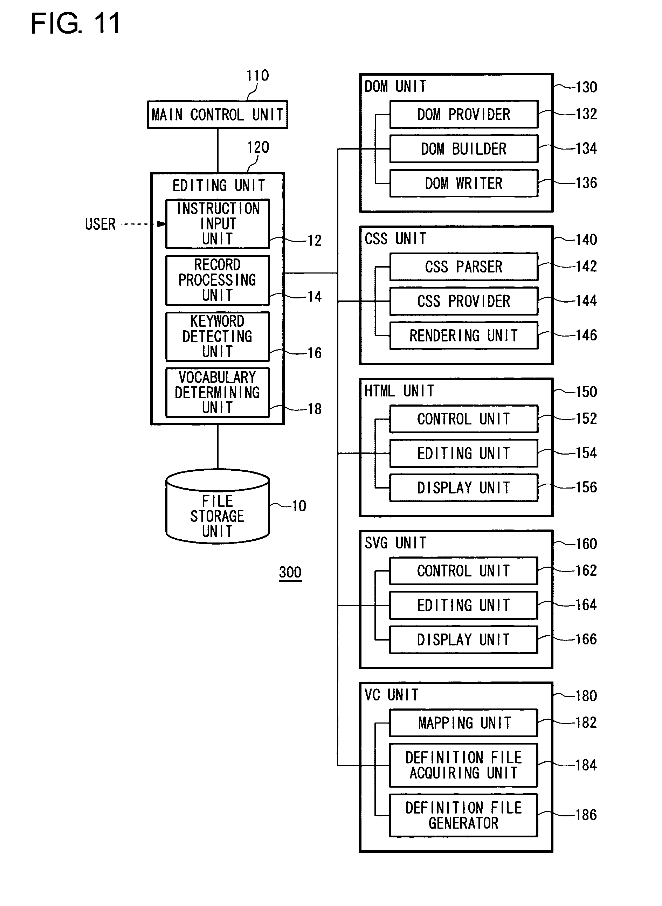

FIG. 11 shows the configuration of an information management apparatus 300 according to an embodiment. The information management apparatus 300 stores personal information such as a to-do list and so forth in a reminder file structured with a markup language. Description will be made in the present embodiment regarding an arrangement having a function of processing a document file structured with XML which is an example of a structured document. Here, the information management apparatus 300 corresponds to the document processing apparatus 100 shown in FIG. 1. Also, the components in the drawing denoted by the same reference numerals as those in FIG. 1 provides the same or similar functions as those described with reference to FIG. 1. In addition to the components shown in FIG. 1, the information management apparatus 300 includes an file storage unit 10, an instruction input unit 12, a record processing unit 14, a key word detecting unit 16, and a vocabulary determining unit 18. Note that the instruction input unit 12, the record processing unit 14, the key word detecting unit 16, and the vocabulary determining unit 18, are included in the editing unit 120.

The file storage unit 10 holds multiple management items, which have been input as reminder items, in the form of a reminder. The reminder file has a structure in which files are prepared in increments of users, and the multiple management items with respect to the personal information for each user are described in the corresponding file in a structured form using a vocabulary prepared for the reminder. Each management item is an element of the reminder, and is information which is to be input for a predetermined purpose with respect to the user's affairs. Examples of the management items include: items which are to be performed by the user (to-do list); items which have been performed by the user (daily report, business results, e-mail transmission/reception history); tasks which are to be reviewed (agenda); reference information for the user's affairs (address book, notes); etc.

The editing unit 120 includes the instruction input unit 12, the record processing unit 14, the keyword detecting unit 16, and the vocabulary determining unit 18. The instruction input unit 12 receives an event, which serves as an instruction to edit the multiple management items included in the reminder file, from the user through the user interface. The term "editing instruction" as used here includes an instruction to input a new management item, and an instruction to modify or update the management item that have already been input. Furthermore, the instruction input unit 12 notifies a suitable plug-in such as the HTML unit 150, the SVG unit 160, etc., or the VC unit 180 for controlling VC, of the editing instruction event thus received from the user. Furthermore, the instruction input unit 12 controls redoing an event (redo) and undoing an event (undo).

The DOM builder 134 creates data in a format in accordance with a document object model (DOM) stipulated for providing an access method to handle the management items as data. That is to say, the DOM builder 134 creates a DOM tree based upon an XML document in the form of a reminder file stored in the file storage unit 10. Let us consider a case in which the reminder file is mapped to another vocabulary by the VC unit 180. In this case, the DOM builder 134 creates: a source tree which is first document object model data that provides a logical structure for the management items corresponding to an XML document that serves as a mapping source; and a destination tree which is second document object model data that provides a structure for displaying the management items corresponding to another XML document that serves as a mapping destination.

Of the management items included in the reminder file, the mapping unit 182 maps the items that cannot be displayed or edited under the environment provided by any one of the installed plug-ins to a predetermined vocabulary that can be handled, according to the kind of information. The mapping results are used by the DOM builder 134 for creation or editing of the destination tree.

The editing processing system including the editing units 154 and 164 is divided into multiple processing systems, each of which corresponds to a respective kind of information with respect to the management item. Such an editing system provides the user with a separate editing environment for each kind of information. For example, the editing unit 154 of the HTML unit 150 provides an editing environment for the contents displayed in HTML. On the other hand, the editing unit 164 of the SVG unit 160 provides an editing environment for the contents displayed in SVG. The VC unit 180 provides the other editing environments which cannot be provided by any one of the plug-ins.

The keyword detecting unit 16 detects words from the editing target text input through the instruction input unit 12 that satisfy a predetermined identification conditions. The term "keyword" as used here represents a word which is to be detected so as to identify the kind of information based upon the contents or the attribute of each management item. The keyword detecting unit 16 may dynamically detect whether or not a predetermined keyword has been input in increments of input characters while receiving the text input from the user. Also, the keyword detecting unit 16 may detect a keyword from a text in increments of batches of texts each of which is formed of characters input by the user. Also, the keyword detecting unit 16 may detect a keyword from a file such as a received e-mail. Also, the keyword detecting unit 16 may detect a keyword in increments of morphemes using a morphological analysis method. Note that the morphological analysis method and the detecting method for detecting a word that matches a keyword are known method, and accordingly, description thereof will be omitted. There are multiple predetermined identification conditions in the form of: a correlation between the kind of keyword and the kind of tag; a correlation between the kind of tag and the kind of vocabulary; and a correlation between the kind of keyword and the kind of vocabulary. The identification conditions are held by at least one of the keyword detecting unit 16, the vocabulary determining unit 18, and the file storage unit 10. Examples of the kinds of keywords include: parts of speech keywords such as "noun", "verb", etc.; classification keywords such as "person's name", "department name", "place name", "date", etc.; specific keywords such as a particular person's name or a particular corporate name (e.g., Managing Director, XX, or XX Co., Ltd.); etc. The term "vocabulary" as used here represents a local tag set used for configuring a reminder file. Examples of the vocabularies include: a tag set for surrounding a character string that indicates a category of a management item; a tag set for surrounding a character string that indicates whether or not the contents of the management item have already been performed; a tag set for surrounding a character string that indicates the date; a tag set for surrounding a character string that indicates the priority; etc. Examples of the kinds of vocabularies include: a vocabulary that allows the multiple management items to be input and displayed in an itemized freeform manner; a vocabulary that allows the multiple management items to be displayed in a time series manner such as a scheduler; a vocabulary that allows the contents extracted from other document files to be displayed in the form of a reference corresponding to a part of the contents included in the multiple management items; etc.

Examples of the correlations between the kind of keyword and the kind of tag include: a correlation between a keyword with respect to the date and the tag for surrounding the keyword; the correlation between a keyword with respect to the category and the tag for surrounding the keyword; etc. Each keyword may be correlated with a display color in which the keyword is displayed. With such an arrangement, the keyword thus detected is displayed on a screen in a color determined based upon the correlation between the keyword and the display color. Examples of the correlations between the kind of keyword and the kind of vocabulary include: a correlation between a keyword such as a person's name or a department name and a vocabulary that allows a schedule to be input and displayed; a correlation between a keyword such as a person's name or a place name and a vocabulary that allows an address book to be input and displayed; etc.

The vocabulary determining unit 18 selects a vocabulary used for input or display of a document according to the keyword detected by the keyword detecting unit 16 or according to instructions from the user. In a case that the vocabulary is selected according to the keyword, the vocabulary determining unit 18 selects the vocabulary based upon the correlation between the kind of keyword and the vocabulary determined in the form of an identification condition. This allows the vocabulary to be selected according to the kind of information with respect to each management item determined by the kind of keyword. Also, a modification may be made in which the vocabulary determining unit 18 surrounds a detected keyword with a corresponding tag set, and selects a vocabulary corresponding to the tag set.

The record processing unit 14 transmits an editing instruction, received from the user through the instruction input unit 12, to an editing processing system including the editing units 154 and 164, and the VC unit 180. Then, the plug-in or the VC unit 180 modifies a source tree which is to be processed. The record processing unit 14 updates the reminder file stored in the file storage unit 10 according to the contents of the editing instructions transmitted to the editing processing system. For example, let us consider a case of receiving an instruction to add or delete a certain item. In this case, the new management item is added, or the item is deleted. In a case of receiving an instruction to modify the contents of a certain item, the corresponding portion is replaced with new modified contents.

In a case of modifying the contents displayed in HTML, the source tree is modified through the editing processing system provided by the editing unit 154 of the HTML unit 150. On the other hand, in a case of modifying the contents displayed using SVG, the source tree is modified through the editing processing system provided by the editing unit 164 of the SVG unit 160. On the other hand, in a case of modifying the contents configured based upon a vocabulary for which no plug-in has been provided, unlike HTML, SVG, etc., the source tree is modified by the VC unit 180.

The display processing system including the display units 156 and 166 is divided into multiple processing systems each of which corresponds to a respective kind of information with respect to the management item. Such an arrangement allows the multiple management items included in the reminder file to be displayed in separate display formats corresponding to the respective kinds of information. Examples of the display methods include: a method for displaying the multiple management items on a single display region at the same time in separate display formats; a method for displaying the same management item in various display formats while switching the display format; etc. The display format in which each of the multiple management items is to be displayed is determined based upon the instructions received from the user through the instruction input unit 12 or based upon the keyword thus detected.

With the display processing system including the display units 156 and 166, in some cases, the plug-in displays the contents of the reminder file in a display region by directly referring to the source tree of the management items. Alternatively, the contents of the reminder file are displayed in the display region with reference to the destination tree corresponding to the source tree of the management items. Also, each related item may be displayed in the display region in multiple display formats at the same time using multiple plug-ins or multiple destination trees for each single source tree. Also, the display format may be switched by selectively using any one of the multiple plug-ins or the multiple destination trees.

Let us consider a case in which the keyword detected by the keyword detecting unit 16 is a word which is to be extracted from other documents, which is determined in the identification condition. In this case, the display processing system including the display units 156 and 166 extracts the text including the keyword from one of the other document files stored in the file storage unit 10 or an unshown network server. Examples of "other document files" include: the data of e-mail transmitted/received by the user; and a reminder file storing a schedule or the like of another user. Also, an index set for keyword detection may be created beforehand for these document files. The display processing system displays the extraction results in a form such that the extraction results, which comprise at least a part of the text extracted from the other document files, are embedded in the corresponding management items. That is to say, the extraction results are described in a part of the destination tree using a vocabulary corresponding to the keyword. Also, the portion of the extraction results is displayed in the management item using the plug-in corresponding to the keyword. The mapping unit 182 maps the extraction results to a predetermined vocabulary or plug-in which can handle the extraction results. Also, a modification may be made in which the extraction results are transmitted to the VC unit 180, and the source tree is modified using the vocabulary corresponding to the keyword, thereby modifying the display contents through the destination tree or the plug-in. With such a modification, the extraction results may be embedded in the reminder file.

For example, in a case that the keyword "received mail" is input in one of the management items stored in the reminder file, the e-mails received on the date specified by the management item are extracted in the form of a list. The extraction results are described in the destination tree using the vocabulary which has been set to correlate with the keyword "received mail". Alternatively, the extraction results are displayed in the management item by the plug-in which has been set to correlate with the keyword "received mail". The structure of the "extraction results" may be determined beforehand in the identification condition. For example, the data extracted from the information with respect to the e-mail such as the title of the e-mail, the date of transmission/reception, the transmitter, the receiver, etc., may be provided as the aforementioned "extraction results" in the form of a list. Also, the data extracted from the information with respect to the schedule of other users such as the schedule contents, the scheduled date, etc., may be provided as the aforementioned "extraction results". The "extraction results" may be provided in the form of a list in such a manner that it is linked to the source data which is to be extracted, without involving extracted data itself.

The display processing system including the display units 156 and 166 provides a function of switching the display mode between a display mode in which the extraction results are displayed in an embedded form and a display mode in which the extraction results are not displayed, according to switching instructions received from the user through the instruction input unit 12. Examples of the switching instructions received from the user include a click operation for a particular portion displayed in a display region, e.g., a portion where a character string that serves as a keyword is displayed.

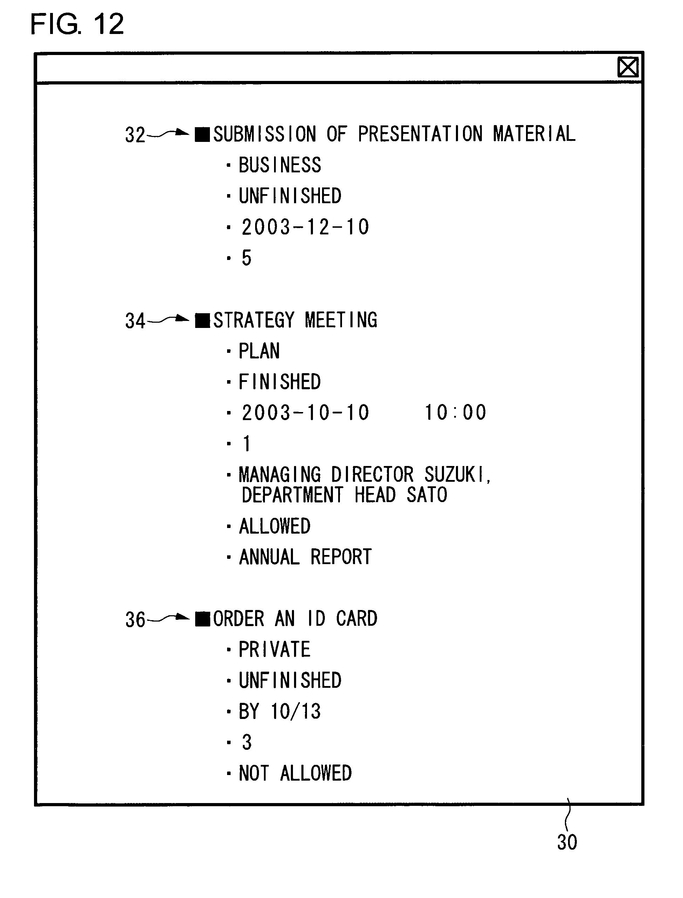

FIG. 12 shows an example of a screen on which the management items are displayed in an editable screen display manner. Such an editable screen 30 allows the user to input multiple management items, which are to be performed by the user, in an itemized manner. A first item 32 denotes a management item having as its contents "submission of presentation material". The character string "business" input below the first item 32 indicates that this item belongs to the category of "business". On the other hand, the character string "unfinished" indicates that the item has not yet been performed. The character string "2003-12-10" represents the date of the deadline for the presentation material. The single-digit number "5" represents the priority of this item.

A second item 34 denotes a management item having as its contents "strategy meeting". The character string "plan" input below the second item 34 indicates that this item belongs to the category of "plan". On the other hand, the character string "finished" indicates that the item has already been performed. The character string "2003-10-10 10:00" represents the date and time of the "strategy meeting". The single-digit number "1" indicates that this item is of the highest priority. The character string "Managing Director Suzuki, Department Head Sato" indicates that these two persons attended the meeting. The character string "allowed" indicates whether or not the item can be disclosed to other users. The character string "annual report" represents the contents which are not classified into a particular category, unlike the aforementioned character strings.

A third item 36 denotes a management item having as its contents of "order an ID card". The character string "private" input below the third item 36 indicates that this item belongs to the category of "private". On the other hand, the character string "unfinished" indicates that the item has not yet been performed. The character string "by 10/13" represents the deadline for the "order an ID card". The single-digit number "3" indicates the priority of this item. The character string "not allowed" indicates whether or not the item can be disclosed to other users. The contents of the aforementioned first, second, and third items 32, 34, and 36 are created as data in the form of an XML document using a vocabulary including the elements which indicate "item", "category", "whether or not the item has been performed", "date", "priority", "participants", and "whether or not the item can be disclosed to other users".

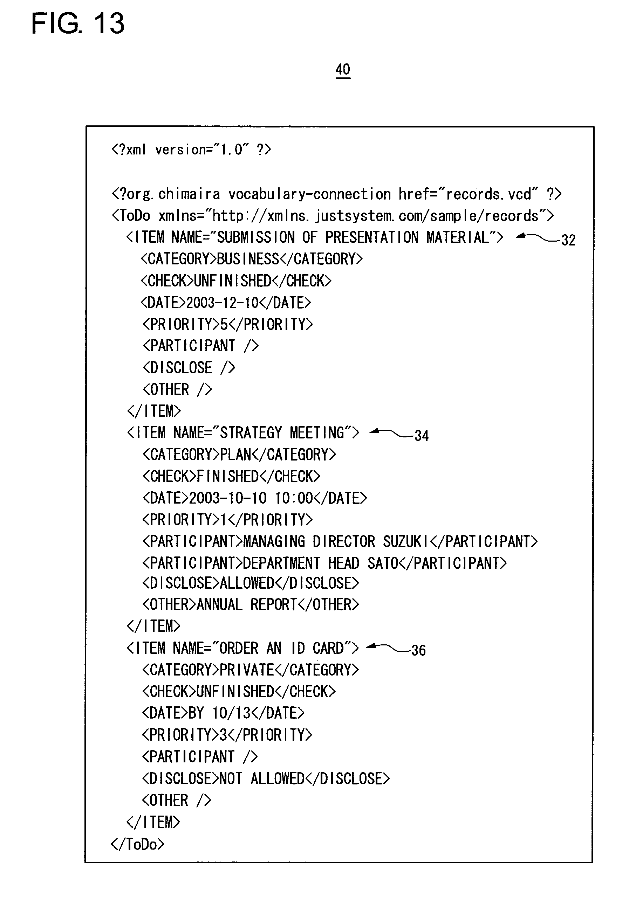

FIG. 13 shows an XML source document corresponding to the display contents shown in FIG. 12. With regard to the first item 32, the character string of the item name "submission of presentation material" is surrounded by <item> tags. The character string "business", which indicates the category, is surrounded by the <category> tags. The character string "unfinished", which indicates that the item has not been yet performed, is surrounded by the <check> tags. The character string "2003-12-10", which indicates the deadline for submission of the presentation material, is surrounded by the <date> tags. The single-digit number "5", which indicates the priority of this item, is surrounded by the <priority> tags. In addition, the <participant> tags, the <disclose> tags, and the <other> tags are described without any actual contents input for these items, i.e., with these items left blank.

With regard to the second item 34, the character string of the item name "strategy meeting" is surrounded by <item> tags. The character string "plan", which indicates the category, is surrounded by the <category> tags. The character string "finished", which indicates that the item has already been performed, is surrounded by the <check> tags. The character string "2003-10-10 10:00", which indicates the date and time of the "strategy meeting", is surrounded by the <date> tags. The single-digit number "1", which indicates the priority of this item, is surrounded by the <priority> tags. The character string "Managing Director Suzuki, Department Head Sato", which indicates the participants in the "strategy meeting" is surrounded by the <participant> tags. The character string "allowed", which indicates whether or not the item can be disclosed to other users, is surrounded by the <disclose> tags. The character string "annual report" is surrounded by the <other> tags.

With regard to the third item 36, the character string of the item name "order an ID card" is surrounded by <item> tags. The character string "private", which indicates the category, is surrounded by the <category> tags. The character string "unfinished", which indicates that the item has not been yet performed, is surrounded by the <check> tags. The character string "by 10/13", which indicates the deadline for the "order an ID card", is surrounded by the <date> tags. The single-digit number "3", which indicates the priority of this item, is surrounded by the <priority> tags. Also, the <participant> tags, <disclose> tags, and <other> tags, are described without any actual contents input in this item, i.e., with these items left blank.

As described above, in a case of detecting the character strings "business", "plan", and "private", which are the category names that serve as keywords, each of these character strings is described using the <category> tags. In a case of detecting the character string "finished" or "unfinished", the character string is described using the <check> tags. In the same way, in a case of detecting each character string, the character string is described using the corresponding tags, thereby forming an XML document.

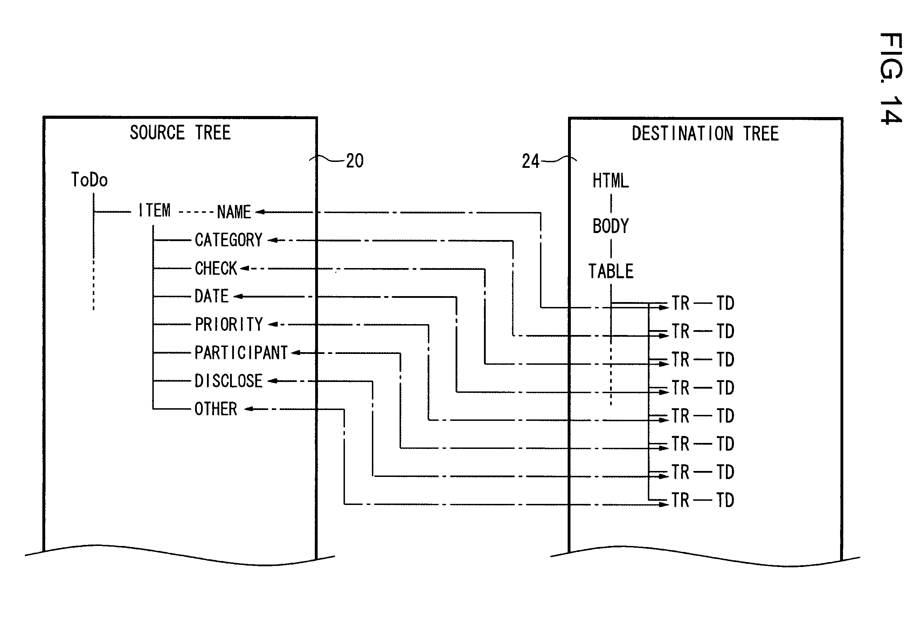

FIG. 14 is a schematic diagram which shows the relation between a source tree and a destination tree. In a source tree 20, the items shown in FIGS. 12 and 13 are described in the form of a tree structure. A destination tree 24 shows an example in which the management items represented in the source tree 20 are mapped to a table described in HTML. That is to say, the <category> tags, <check> tags, <date> tags, <priority> tags, <participant> tags, <disclose> tags, and <other> tags, which are components of the management items for the source tree 20, are mapped to the specific <TR> tags. This provides a HTML table in which each component of the reminder file is displayed in a corresponding row. With such an arrangement, any vocabulary can be defined as desired in a form such that the components are mapped to an existing plug-in such as HTML or the like. A template may be created for providing such a mapping definition and vocabulary defined beforehand. Such a template can be created by a simple operation, mainly by a drag and drop operation.

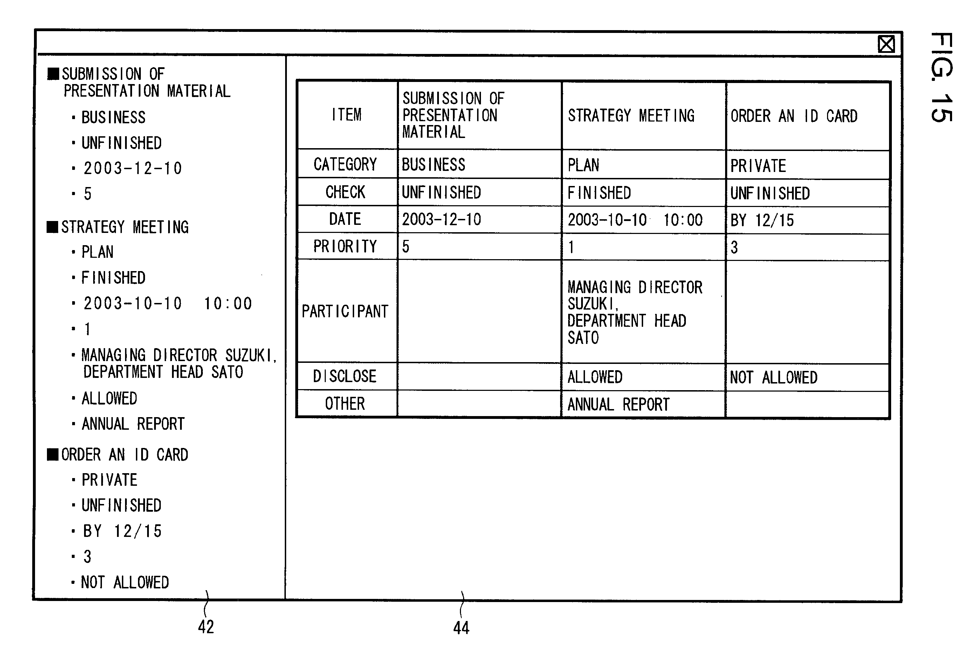

FIG. 15 shows an example in which an editable screen and a table display screen are displayed on a single screen at the same time. In the screen shown in this drawing, an editable screen 42 is displayed on the left side of the display region. On the other hand, a table display screen 44 is displayed on the right side of the display region. The contents of the editable screen 42 are displayed using the same vocabulary as that for the editable screen 30 shown in FIG. 12. The contents of the table display screen 44 are displayed based upon a different destination tree created based upon the same source tree as the contents displayed on the editable screen 42. Here, a separate table is configured for each item. The destination tree for displaying the table display screen 44 corresponds to the destination tree 24 shown in FIG. 14. As described above, such an arrangement allows the contents of each management item stored in a reminder file that are represented using a single source tree to be displayed in multiple display formats on a single display region at the same time.

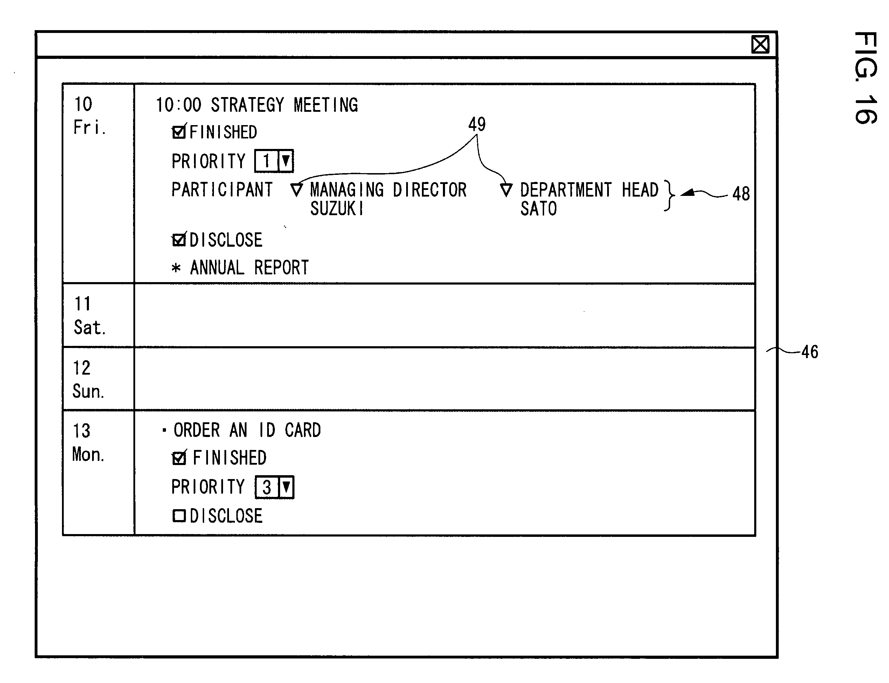

FIG. 16 shows an example of the management items displayed on a scheduler screen. Upon the instruction input unit 12 receiving an instruction from the user to switch the screen to one on which the contents of the reminder file are displayed in the form of a scheduler, a scheduler screen 46 shown in this drawing is displayed in the display region. In the scheduler screen 46, a separate frame is displayed for each date according to a dedicated plug-in or vocabulary. Then, each management item is displayed within a corresponding frame based upon the information with respect to the date included in the management item, thereby displaying each item in a time series manner.

Specifically, the character string "10:00", which represents the scheduled time, and the character string "strategy meeting" described using the <item> tags are displayed within the "Oct. 10 (Fri.)" frame. This item corresponds to the second item 34 shown in FIGS. 12 and 13. In a case that the contents are described using the <check> tags, a check box is displayed together with the character string "finished", which allows the user to confirm whether or not the item has already been performed by confirming whether or not the check box has been checked. The contents described using the <priority> tags display a pull-down list, which allows any one of numbers 1 through 5 to be displayed, with the character string "priority". The contents described using the <participant> tags display the character string "participants" and the character strings "Managing Director Suzuki" and "Department Head Sato" with expansion buttons 49 in a participant field. Such an arrangement allows the user to transmit an instruction to switch the display mode to that in which the schedule of each participant is expanded in this item, i.e., is displayed in an embedded manner, by clicking the corresponding expansion button 49. The contents described using the <disclose> tags display a check box with the character string "disclose", which allows the user to confirm whether or not the item can be disclosed to other users, by confirming whether or not the check box has been checked. The contents described using the <other> tags display the contents with a symbol "*"

On the other hand, the contents of the third item 36 are displayed within the "Oct. 13 (Mon.)" frame. Examples of the components displayed in this frame include: the character string "order an ID card" described using the <item> tags; a check box with the character string "finished" in the same way as with the second item 34; a pull-down list with the character string "priority"; and a check box with the character string "disclose". Description has been made regarding an arrangement in which the management items input through the screen shown in FIG. 12 or FIG. 15 are displayed in the form of a scheduler. Also, an arrangement may be made which allows the user to directly input each management item via the screen displayed in a manner as shown in FIG. 16. With such an arrangement, in a case that the user inputs the character string "finished" or "disclose", for example, the character string thus input is detected as a keyword, and a check box is automatically displayed. On the other hand, in a case that the user inputs the character string "priority", the character string thus input is detected as a keyword, and a pull-down list is automatically displayed. Also, an arrangement may be made in which, in a case that the item has not yet been performed, the information that indicates that the deadline is approaching is displayed in the frame corresponding to the date several days before the deadline "Oct. 13" in the form of a warning. Also, an arrangement may be made in which the days remaining before the deadline is displayed for each management item with "today" as a point of reference in a manner such as "four days before the deadline", for example.

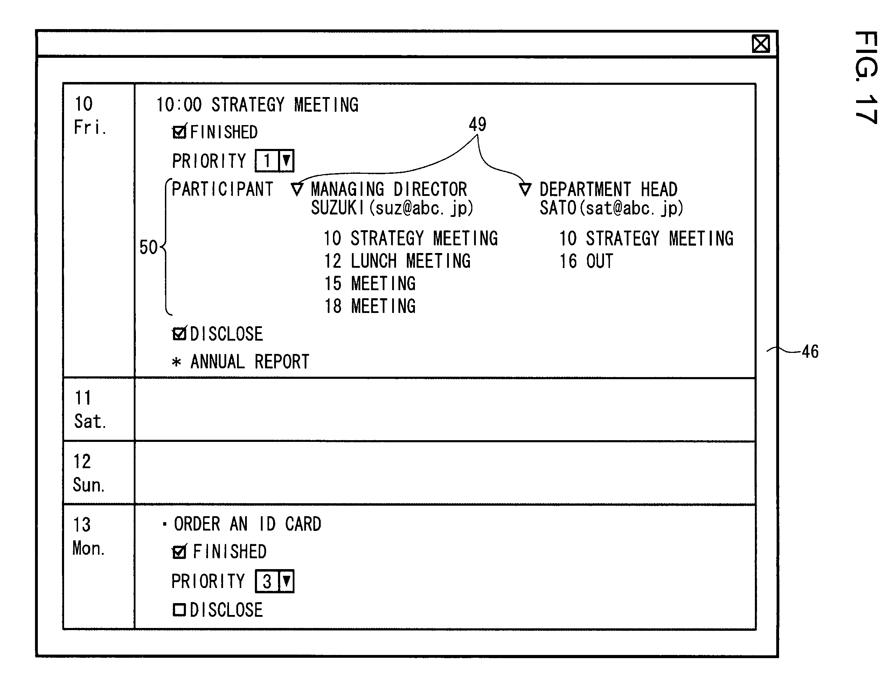

FIG. 17 shows a state in which the contents of another document file are displayed on the scheduler screen shown in FIG. 16 in an embedded manner. A participant field 50 is in a state in which the participant field 48 shown in FIG. 16 is expanded, triggered by the user performing a click operation of the expansion button 49. In this state, the contents of the schedules, that correspond to the keywords "Managing Director Suzuki" and "Department Head Sato", are extracted from corresponding files selected from among the reminder files for other users via a network, and the contents thus extracted are displayed in the participant field 50. The components displayed in the participant field 50 include: a mail address "suz@abc.jp" and the contents of the schedule extracted from the reminder file that stores the schedule of the "Managing Director Suzuki"; and a mail address "sat@abc.jp" and the contents of the schedule extracted from the reminder file that stores the schedule of the "Department Head Sato". In a case that the user replaces the "Managing Director Suzuki" or the "Department Head Sato" with any other names, the contents of the participant field 50 are replaced with the schedule of the corresponding person after the name replacement.

The participant field 50 is displayed with a wider area than that of the participant field 48 shown in FIG. 16. Accordingly, there is a need to reduce the size of the frames for the other dates in order to display the participant field 50. As described above, with the present embodiment, the contents are displayed using a predetermined vocabulary within other contents displayed using another vocabulary, thereby enabling a compound document to be displayed using multiple vocabularies.

Note that a modification may be made in which the contents that can be expanded according to the operation of the expansion button 49 are shared with other users. With such a modification, the storage area for storing the contents to be shared is set as a node, and the node information is shared with other users. For example, let us consider a case in which a certain user has set a part of a document to be shared. In this case, the corresponding contents are stored in a shared area assigned beforehand to the user group, thereby allowing other users, who belong to the same user group, to refer to the contents. Also, with such a modification, in a case of other users making the same settings, the contents stored in the shared area are automatically embedded in the document.

Description has been made regarding the present invention with reference to the embodiments. The above-described embodiments have been described for exemplary purposes only, and are by no means intended to be interpreted restrictively. Rather, it can be readily conceived by those skilled in this art that various modifications may be made by making various combinations of the aforementioned components or processes, which are also encompassed in the technical scope of the present invention. A modification will be described below.

Description has been made in the aforementioned embodiment regarding an arrangement in which an XML document is processed. Also, the information management apparatus 300 according to the present embodiment may provide a function of processing a document described in other markup languages such as SGML, HTML, etc., in the same way.

### Industrial Applicability

The present invention may be applied to an information terminal for processing personal information management.

## Claims

1. A document processing apparatus comprising:
an instruction input unit for receiving an editing instruction from a user with respect to a plurality of management items which are managed as a reminder of a matter which is to be performed by the user;
a file storage unit for storing a reminder file including the plurality of management items in a structured form created using a vocabulary of a markup language for creating a structured document;
a record processing unit for updating the reminder file based upon the editing results edited according to the editing instruction;
a display processing unit for displaying the plurality of management items included in the reminder file in a display region in separate display manners based upon markup languages corresponding to the respective kinds of information;
a keyword detecting unit for detecting a word that satisfies a predetermined identification condition from a text received from the user via said instruction input unit as a keyword; and
a vocabulary determining unit for selecting a vocabulary that accords with the keyword thus detected as a vocabulary for a markup language for creating a structured document, which allows a text received from the user via said instruction input unit to be displayed in a display region.

2. A document processing apparatus according to Claim 1,
wherein said keyword detecting unit holds the relation between the kind of keyword and the vocabulary as the identification condition,
and wherein said vocabulary determining unit selects a vocabulary according to the kind of keyword thus detected.

3. A document processing apparatus according to Claim 1,
wherein said keyword detecting unit holds the relation between the kind of keyword and the kind of tag and the relation between the kind of tag and the vocabulary as the identification condition,
and wherein said vocabulary determining unit determines a tag set, which is to be added to a character string including the keyword, based upon the kind of keyword thus detected, and selects a vocabulary according to the tag set.

4. A document processing apparatus comprising:
an instruction input unit for receiving an editing instruction from a user with respect to a plurality of management items which are managed as a reminder of a matter which is to be performed by the user;
a file storage unit for storing a reminder file including the plurality of management items in a structured form created using a vocabulary of a markup language for creating a structured document;
a record processing unit for updating the reminder file based upon the editing results edited according to the editing instruction;
a display processing unit for displaying a plurality of management items included in the aforementioned reminder file in a display region in separate display manners determined based upon markup languages corresponding to the respective kinds of information; and
a keyword detecting unit for detecting a word that satisfies a predetermined identification condition from a text received from the user via said instruction input unit as a keyword,
wherein said display processing unit extracts a text, which includes the keyword thus detected, from another document file, and displays extraction results, which comprise at least a part of the text thus extracted, in the display region in separate display manners in a form such that the extraction results are embedded in the plurality of management items according to the kind of information.

5. A document processing apparatus according to Claim 4,
wherein said display processing unit dynamically switches a display mode between a display mode in which the aforementioned extraction results are displayed in an embedded manner, and a display mode in which the aforementioned extraction results are not displayed, according to switching instructions from the user.

6. A document processing apparatus according to Claim 4 or 5, further comprising a conversion unit for mapping the aforementioned extraction results to a predetermined vocabulary that can be handled.

7. A document processing method comprising:
a step for receiving an editing instruction from a user with respect to a plurality of management items which are managed as a reminder of a matter which is to be performed by the user;
a step for reading out a reminder file including the plurality of management items in a structured form created using a vocabulary of a markup language for creating a structured document;
a step for updating the reminder file based upon the editing results edited according to the editing instruction;
a step for displaying the plurality of management items included in the reminder file in a display region in separate display manners based upon markup languages corresponding to the respective kinds of information;
a step for detecting a word that satisfies a predetermined identification condition from a text received from the user as a keyword; and
a step for selecting a vocabulary that accords with the keyword thus detected as a vocabulary for a markup language for creating a structured document, which allows a text received from the user to be displayed in a display region.

8. A document processing method comprising:
a step for receiving an editing instruction from a user with respect to a plurality of management items which are managed as a reminder of a matter which is to be performed by the user;
a step for reading out a reminder file including the plurality of management items in a structured form created using a vocabulary of a markup language for creating a structured document;
a step for updating the reminder file based upon the editing results edited according to the editing instruction; and
a step for displaying a plurality of management items included in the aforementioned reminder file in a display region in separate display manners determined based upon the markup languages corresponding to respective kinds of information;
a step for detecting a word that satisfies a predetermined identification condition from a text received from the user as a keyword; and
a step for extracting a text, which includes the keyword thus detected, from another document file, and displaying extraction results, which comprise at least a part of the text thus extracted, in the display region in separate display manners in a form such that the extraction results are embedded in the plurality of management items according to the kind of information.

9. A computer program providing a computer with:
a function for receiving an editing instruction from a user with respect to a plurality of management items which are managed as a reminder of a matter which is to be performed by the user;
a function for storing a reminder file including the plurality of management items in a structured form created using a vocabulary of a markup language for creating a structured document;
a function for updating the reminder file based upon the editing results edited according to the editing instruction;
a function for displaying the plurality of management items included in the reminder file in a display region in separate display manners based upon markup languages corresponding to the respective kinds of information;
a function for detecting a word that satisfies a predetermined identification condition from a text received from the user as a keyword; and
a function for selecting a vocabulary that accords with the keyword thus detected as a vocabulary for a markup language for creating a structured document, which allows a text received from the user to be displayed in a display region.

10. A computer program providing a computer with:
a function for receiving an editing instruction from a user with respect to a plurality of management items which are managed as a reminder of a matter which is to be performed by the user;
a function for storing a reminder file including the plurality of management items in a structured form created using a vocabulary of a markup language for creating a structured document;
a function for updating the reminder file based upon the editing results edited according to the editing instruction;
a function for displaying a plurality of management items included in the aforementioned reminder file in a display region in separate display manners determined based upon the markup languages corresponding to respective kinds of information;
a function for detecting a word that satisfies a predetermined identification condition from a text received from the user as a keyword; and
a function for extracting a text, which includes the keyword thus detected, from another document file, and displaying extraction results, which comprise at least a part of the text thus extracted, in the display region in separate display manners in a form such that the extraction results are embedded in the plurality of management items according to the kind of information.
